# EUROPEAN PATENT APPLICATION

(11) **EP 3 859 423 A1**
(43) Date of publication of application: **04.08.2021**
(21) Application number: 20154389.9
(22) Date of filing: 29.01.2020
(51) Int. Cl.: G02B 21/00, G02B 21/22, G02B 21/36, G06T 7/593, G01B 11/24, H04N 13/293

(54) **SYSTEM, METHOD AND COMPUTER PROGRAM FOR A STEREO-MICROSCOPE AND STEREOSCOPIC MICROSCOPE SYSTEM**

(71) Applicant: Leica Instruments (Singapore) Pte. Ltd., 608924 Singapore (SG)
(72) Inventor: GÜNTERT, Michael, 9435 Heerbrugg (CH)
(74) Representative: 2SPL Patentanwälte PartG mbB

(57) **Abstract**

Examples relate to a system (110), a method and a computer program for a microscope (120), and to a microscope system (100) comprising the microscope (120) and a system which comprises one or more processors and one or more storage devices. The system is configured to obtain first image data of a sample from a first optical imaging sensor of the microscope. The system is configured to obtain second image data of the sample from a second optical imaging sensor of the microscope. The system is configured to combine the first image data and the second image data to obtain combined image data. A first region of the combined image data comprises a stereoscopic view of a first region of the sample that is based on the first and the second image data. A second region of the combined image data comprises a two-dimensional view of a second region of the sample that is based on one of the first image data and the second image data.

## Description

### Technical field

Examples relate to a system, a method and a computer program for a microscope, and to a microscope system comprising the microscope and said system.

### Background

A field of research and development in the development of microscopes is the field of three-dimensional imaging. Using three-dimensional imaging, a more detailed, three-dimensional view of a sample, e.g. a wound cavity, can be obtained. For various surgical approaches, it is recommended to perform the procedure as minimally invasive as possible to reduce complications and wound sizes. In such cases, dilators may be used to get a big enough access to the surgical field.

While the dilators reduce the size of the wound tract, they also limit the ability to create stereoscopic images using a surgical microscope. If a dilator is being used, either two-dimensional imaging can be used, or a very small stereo basis may be applied to get clear images. If two-dimensional imaging is used, the surgical procedure may be harder to perform. If a small stereo base is used, only limited depth information may be provided for any procedure the system is being used in.

### Summary

There may be a desire for providing an improved concept for imaging in microscopes, particular in situations with a partially obstructed view.

The desire is addressed by the subject-matter of the independent claims.

Embodiments are based on the finding, that the above drawbacks may be avoided by performing image-processing on the image data of the two stereoscopic imaging sensors of the microscope. Instead of using image data of only a single imaging sensor, or instead of restricting the stereo basis of the three-dimensional imaging, image processing may be used to combine the image data of the two imaging sensors, and to generate a first region in which three-dimensional imaging is available, and a second region in which the two-dimensional image data of one of the imaging sensors is used to provide a peripheral two-dimensional view outside the first region. This may both increase the stereo basis to its maximally feasible size and provide peripheral view for regions where image data of only one of the imaging sensors is available. Embodiments may thus provide a microscope system, e.g. a surgical microscope system, with a big stereo base, providing an imaging algorithm to obtain an improved picture quality in "deep cavity" applications

Embodiments of the present disclosure provide a system for a microscope. The system comprises one or more processors and one or more storage devices. The system is configured to obtain first image data of a sample from a first optical imaging sensor of the microscope. The system is configured to obtain second image data of the sample from a second optical imaging sensor of the microscope. The system is configured to combine the first image data and the second image data to obtain combined image data. A first region of the combined image data comprises a stereoscopic view of a first region of the sample that is based on the first and the second image data. A second region of the combined image data comprises a two-dimensional view of a second region of the sample that is based on one of the first image data and the second image data. This may provide the stereoscopic view to the extent it is possible, and a two-dimensional view in areas where only image data of one of the imaging sensors is available.

For example, the system may be suitable for performing partial stereoscopic imaging of a partially obstructed region within a cavity. Thus, the system may enable or improve stereoscopic images in narrow wound cavities.

In various embodiments, the first region of the sample is separate from the second region and/or separate from a third region of the sample. For example, either a stereoscopic view of a portion of the sample is provided (where possible), or a two-dimensional view is provided (e.g. if the portion is visible in only one of the first and second image data).

In various embodiments, the second region of the combined image data comprises a two-dimensional view of the second region of the sample that is based on the first image data. A third region of the combined image data may comprise a two-dimensional view of a third region of the sample that is based on the second image data. The second and third regions may be on opposing sides of the first region.

In various embodiments, the system may be configured to determine an overlap of the first and second image data. The system may be configured to identify the first region of the sample within the first and second image data based on the overlap of the first and second image data. For example, the size of the first region may be chosen based on the overlap between the image data, which may enable the use of a larger portion of the image data for stereoscopic imaging.

For example, the system may be configured to generate the combined image data such, that a spacer is inserted between the first region and the second region within the combined image data. The spacer may be used as a visual aid, to show a user of the microscope the transition between the stereoscopic and the two-dimensional view.

In various embodiments, the system may be configured to provide the combined image data to a display device. For example, the display device may be one of a three-dimensional display, a three-dimensional ocular display, and three-dimensional headset display. The user of the microscope, e.g. a surgeon, may inspect the combined image data using the display device.

For example, the first region of the combined image data may be arranged at a central position of the combined image data. The second region and/or a third region of the combined image data may be arranged at a peripheral position of the combined image data. Thus, in the center of the combined image, which often is of higher interest to the user/surgeon, the stereoscopic view may be available.

Embodiments of the present disclosure provide a microscope system comprising a microscope and the above system. The microscope system, e.g. the microscope of the microscope system, may comprise the first optical imaging sensor and the second optical imaging sensor.

In some embodiments, the system and/or the microscope system may be used for performing partial stereoscopic imaging of a cavity.

Embodiments of the present disclosure provide a method for a microscope. The method comprises obtaining first image data of a sample from a first optical imaging sensor of the microscope. The method comprises obtaining second image data of the sample from a second optical imaging sensor of the microscope. The method comprises combining the first image data and the second image data to obtain combined image data. A first region of the combined image data comprises a stereoscopic view of a first region of the sample that is based on the first and the second image data. A second region of the combined image data comprises a two-dimensional view of a second region of the sample that is based on one of the first image data and the second image data.

Embodiments of the present disclosure provide a computer program with a program code for performing the method when the computer program is executed on a processor.

### Short description of the Figures

Some examples of apparatuses and/or methods will be described in the following by way of example only, and with reference to the accompanying figures, in which
Figs. 1a and 1b show block diagrams of embodiments of a system for a microscope, and to a microscope system comprising the microscope and said system;
Fig. 1c shows a schematic diagram of regions within combined image data;
Fig. 2 shows a flow chart of an embodiment of a method for a microscope;
Figs. 3a and 3b show schematic diagrams of a microscope system;
Fig. 3c shows a schematic diagram of different regions of a sample; and
Fig. 4 shows a schematic diagram of a microscope system comprising a microscope and a computer system.

### Detailed Description

Various examples will now be described more fully with reference to the accompanying drawings in which some examples are illustrated. In the figures, the thicknesses of lines, layers and/or regions may be exaggerated for clarity.

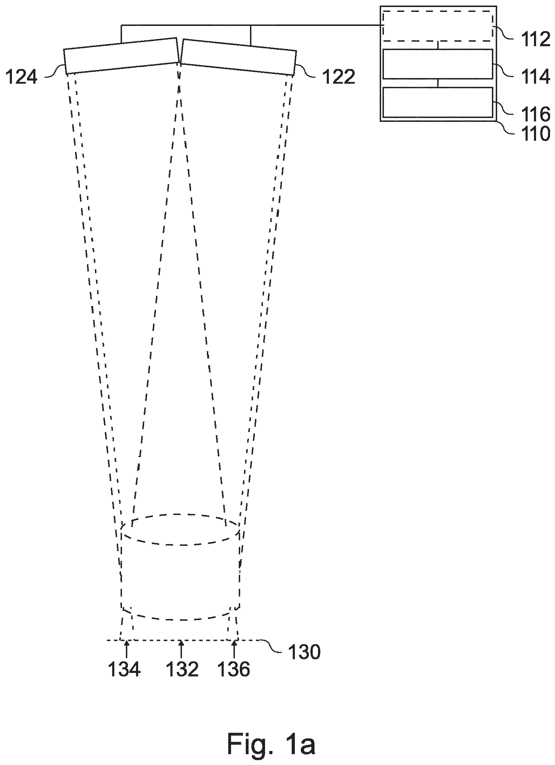

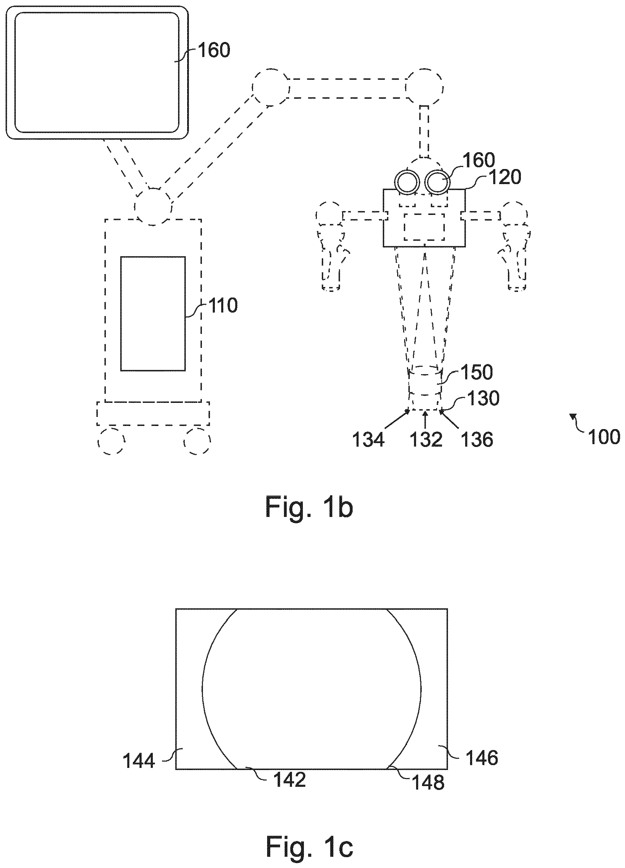

Figs. 1a and 1b show block diagrams of embodiments of a system 110 for a microscope 120, and to a microscope system 100 comprising the microscope and the system 110. The system 110 comprises one or more processors 114 and one or more storage devices 116. The system 110 further optionally comprises an interface 112. The one or more processors 114 are coupled to the one or more storage devices and to the optional interface 112. In general, the one or more processors 114 may be configured to provide the functionality of the system 110, e.g. in conjunction with the interface 112 and/or the one or more storage devices 116.

The system is configured to obtain first image data of a sample 130 from a first optical imaging sensor 122 of the microscope 120. The system is configured to obtain second image data of the sample from a second optical imaging sensor 124 of the microscope. The system is configured to combine the first image data and the second image data to obtain combined image data 140. A first region 142 of the combined image data comprises a stereoscopic view of a first region 132 of the sample that is based on the first and the second image data. A second region 144 of the combined image data comprises a two-dimensional view of a second region 134 of the sample that is based on one of the first image data and the second image data.

Fig. 1b shows a block diagram of the microscope system 100 comprising the microscope 120 (with the first and second optical imaging sensors 122; 124) and the system 110. The microscope system shown in Fig. 1b is a surgical microscope system, which may be used at a surgical site by a surgeon. The surgical microscope system shown in Fig. 1b comprises a number of optional components, such as a base unit 105 (comprising the system 110) with a (rolling) stand, an auxiliary display 160a, a (robotic or manual) arm 170 which holds the microscope 120 in place, and which is coupled to the base unit 105 and to the microscope 120, and steering handles 180 that are attached to the microscope 120. In addition to the optical imaging sensor 122, the microscope 120 may comprise optional ocular displays 160b and an optional auxiliary display 160c. In the context of this application, the term "(surgical) microscope system" is used, in order to cover the portions of the system that are not part of the actual microscope (which comprises optical components), but which are used in conjunction with the microscope, such as the display or a lighting system. Figs. 1a and 1b further show a tube 150, e.g. a dilator tube, which generally is not a part of the system 110 or of the microscope system 100.

Embodiments of the present disclosure relate to a system, method and computer program for a microscope 120. In general, a microscope is an optical instrument that is suitable for examining objects that are too small to be examined by the human eye (alone). For example, a microscope may provide an optical magnification of a sample. In modern microscopes, the optical magnification is often provided for a camera or an imaging sensor, such as the optical imaging sensors 122; 124 of the microscope 120 of Fig. 1a. The microscope 120 may further comprise one or more optical magnification components that are used to magnify a view on the sample.

There are a variety of different types of microscopes. If the microscope system is used in the medical or biological fields, the object being viewed through the microscope may be a sample of organic tissue, e.g. arranged within a petri dish or present in a part of a body of a patient. For example, the microscope system 100 may be a microscope system for use in a laboratory, e.g. a microscope that may be used to examine the sample of organic tissue in a petri dish. Alternatively, the microscope 120 may be part of a surgical microscope system 100, e.g. a microscope to be used during a surgical procedure. Such a system is shown in Fig. 1b, for example. Although embodiments are described in connection with a microscope system, they may also be applied, in a more general manner, to any optical device. For example, the microscope system may be a system for inspecting the inside of tight spaces, such as tubing systems.

The system is configured to process image data of a first and a of a second optical imaging sensor of the microscope 120. For example, the first and second optical imaging sensors 122; 124 may comprise or be APS (Active Pixel Sensor) - or a CCD (Charge-Coupled-Device)-based imaging sensors. For example, in APS-based imaging sensors, light is recorded at each pixel using a photodetector and an active amplifier of the pixel. APS-based imaging sensors are often based on CMOS (Complementary Metal-Oxide-Semiconductor) or S-CMOS (Scientific CMOS) technology. In CCD-based imaging sensors, incoming photons are converted into electron charges at a semiconductor-oxide interface, which are subsequently moved between capacitive bins in the imaging sensor modules by a control circuitry of the sensor imaging module to perform the imaging. The system is configured to obtain (i.e. receive or read out) the first image data and the second image data from the respective sensors of the microscope 120. The first and second image data may be obtained by receiving the first and second image data from the respective optical imaging sensor (e.g. via the interface 112), by reading the first and second image data out from a memory of the optical imaging sensor (e.g. via the interface 112), or by reading the first and second image data from a storage device 116 of the system 110, e.g. after the first and second image data has been written to the storage device 116 by the respective optical imaging sensors or by another system or processor.

The system uses first and second image data of the first and second optical imaging sensors of the microscope. In general, the first and second optical imaging sensors may be used to provide a stereoscopic view (i.e. a three-dimensional view) of a sample. In other words, the microscope may comprise a stereoscopic imaging system, the stereoscopic imaging system comprising the first and second optical imaging sensors. Accordingly, the image data provided by the first and second imaging sensors may be image data of a stereoscopic imaging system of the microscope. For example, the first image data may be a first component of the image data of the stereoscopic imaging system, and the second image data may be a second component of the image data of the stereoscopic imaging system. The system may be configured to combine the first and second image data, and thus the first and second component of the image data of the stereoscopic imaging system, to generate the stereoscopic view of the sample.

The combination of the first and second image data is performed by the system. The system is configured to combine (i.e. merge) the first image data and the second image data to obtain the combined image data 140. In other words, the system may be configured to generate a stereoscopic view of the sample based on the first and second image data, e.g. by processing and combining the first and second image data. Accordingly, the combined image data comprises a stereoscopic view of at least a region of the sample that is based on a combination of the first and second image data.

In embodiments, the combined image data may cover a pre-defined portion of the sample. In other words, the combined image data may have a fixed field of view, which is covered by both the first and second image data if the view on the sample is unobstructed. Accordingly, only a portion of the first image data and only a portion of the second image data might be used for the combined image data. Portions of the first and second image data that extend beyond the field of view of the combined image data may be omitted. On the other hand, (all of) the combined image data may be covered by the first and the second image data if the view on the sample is unobstructed. In the following, the term "view on the sample" is used, which may be equated to "view on a portion of the sample that is part of the field of view of the combined image data".

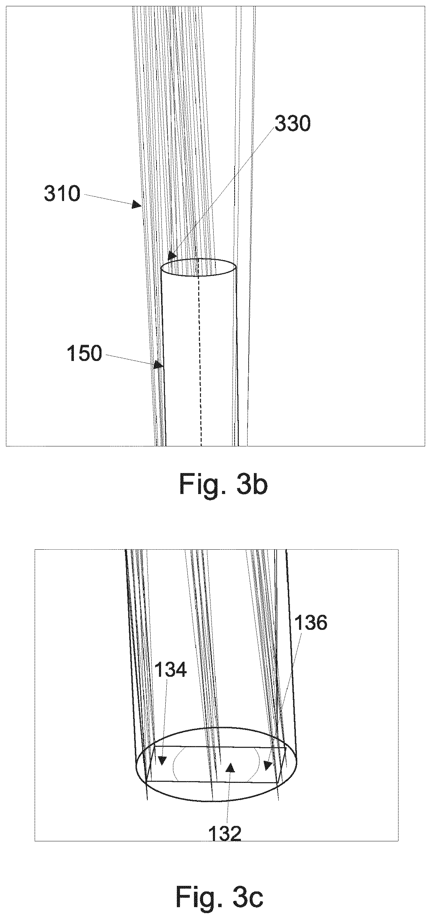

Fig. 1c shows a schematic diagram of regions within combined image data. Fig. 1c shows a first region 142 of the combined image, which is based on a combination of the first and second image data, and which represents the first region of the sample, and a second region 144 of the combined image data, which is based on the first image data, and which represents the second region of the sample. Fig. 1c further shows a third region 146 of the combined image data, which is based on the second image data, and which represents a third region 136 of the sample. In other words, the first region 142 of the combined image data comprises a stereoscopic view of a first region 132 of the sample that is based on the first and the second image data. The second region 144 of the combined image data of Fig. 1c comprises a two-dimensional view of the second region 134 of the sample that is based on the first image data. The third region of the third region 146 of the combined image data comprises a two-dimensional view of the third region 136 of the sample that is based on the second image data. The first 132, second 134 and third 136 regions of the sample can be seen in Figs. 1a and/or 1b, and in Fig. 3c. For example, the first region of the combined image data may be arranged at a central position of the combined image data, e.g. the first region may intersect with the center of the combined image data. The second region and/or the third region of the combined image data may be arranged at a peripheral position (or at peripheral positions) of the combined image data. For example, the second and/or third regions may be arranged to the sides of the first image data. In various embodiments, as shown in Figs. 1c and 3c, the second and third region may be arranged at opposing sides of the first region within the combined image data. In general, the field of view of the combined image data may comprise and/or be composed of the first, second, and optionally the third region.

In Fig. 1a to 1c, three regions are shown for the sample and the combined image data. In some embodiments, however, only two regions may be distinguished. In this case, the second region 144 of the combined image data comprises a two-dimensional view of a second region 134 of the sample that is based on one of the first image data and the second image data.

The combined image data represents the sample, i.e. it comprises a partially stereoscopic, partially two-dimensional view of the sample (or a fully stereoscopic view, if the view on the sample is unobstructed). Accordingly, the regions of the combined view represent the respective regions of the sample. In embodiments, the respective regions of the sample and of the combined image data are distinctive regions, i.e. the regions might not overlap. In other words, the first region of the sample (and of the combined image data) may be separate from the second region and/or separate from the third region of the sample (and of the combined image data). To demark the transition between the regions within the combined image data, a spacer may be inserted between the regions. In other words, the system may be configured to generate the combined image data such, that a spacer 148 is inserted between the first region and the second region (and/or between the first region and the third region) within the combined image data. For example, the spacer may be a thin (e.g. at most 10 pixels wide) line that demarks and/or separates the regions within the combined image data. For example, the spacer may be uniformly colored, e.g. grey or black.

In embodiments, the system may be used for providing a partial stereoscopic view in situations, in which the view on the sample, and thus the focal plane, is partially obstructed, such that a portion of the sample (e.g. the second and/or the third region) is only visible in (exactly) one of the first and the second image data. In other words, a view on the second region and/or on the third region may be obstructed in one of the first image data and the second image data. For example, the view may be obstructed by an obstacle, e.g. by a wall of a tube 150, as shown in more detail in Fig. 3b. For example, during surgery, a dilation device may be used for minimally invasive procedures. Accordingly, the tube may be a tube of a dilation device. While such devices leave small wounds, they also obstruct the view on the surgical site. Embodiments may be used to provide a partial stereoscopic view on the surgical site through the dilation device. Accordingly, the system may be suitable for performing partial stereoscopic imaging of a partially obstructed region within a cavity, e.g. within a wound tract.

In general, the system may have two modes of operation. In a first mode of operation, the system may be configured to combine the first and second image data such, that the entire field of view of the combined image data comprises a stereoscopic view of the sample, i.e. such that the first, second and optional third region of the sample are shown as stereoscopic view within the combined image. For example, in the first mode of operation, the system may be configured to combine the first and second image data to obtain a stereoscopic view of the entire field of view of the combined image data. If this is not possible, e.g. if the view on the sample is partially obstructed (i.e. obstructed for one of the two imaging sensors), the system may utilize the second mode of operation, which has been introduced above. In the second mode of operation, the system may be configured to combine the first and second image data such, that the first region of the combined image data comprises a stereoscopic view of the first region and such that the combined image data comprises a two-dimensional view of the second region and/or a two-dimensional view of the third region. In other words, in the second mode of operation, the system may be configured to perform partial stereoscopic imaging. The system may be configured to switch between the first and second mode of operation, e.g. automatically, or upon request of a user of the microscope.

In some embodiments, the size of the first, second (and optional third) regions of the sample, and correspondingly the combined image data, may be fixed (in the second mode of operation). In other words, the system might use the same size for the first, second and third regions all of the time, or at least as long the feature is enabled. This is suitable for a use of the second mode of operation upon request of the user of the microscope, for example.

In some embodiments, however, the system may be configured to detect a partial obstruction of the field of view of the combined image data, and to set the size of the regions accordingly. For example, the system may be configured to determine an overlap of the first and second image data. The system may be configured to use the first mode of operation if the overlap of the first image data and of the second image data covers the entire field of view of the combined image data. In this case, the system may be configured to combine the first and second image data such, that the combined image data comprises a stereoscopic view of the sample for the entire field of view of the combined image data. In case the field of view is partially obstructed, the second mode of operation may be used. The system may be configured to determine an obstruction of a portion of the field of view based on the overlap of the first image data and of the second image data. For example, the system may be configured to determine an obstruction of a portion of the field of view (i.e. a partial obstruction of the field of view) if a region of the field of view of the combined image data is visible in only one of the first and second image data. For example, the system may be configured to activate or retain the second mode of operation if an obstruction of a portion of the field of view is detected. In this case, either a fixed size may be used for the regions, or the size of the regions may be based on the size of the obstruction (and correspondingly on the size of the overlap. For example, the system may be configured to identify the first region of the sample within the first and second image data based on the overlap of the first and second image data. In other words, the system may be configured to determine a size and/or an extent of the first region, and correspondingly of the second and/or the third region, based on the overlap of the first and second image data. The extent of the first region of the combined image data may be chosen as a geometric form, such as a circle or a circle with levelled sides, that encompasses the overlap of the first and second image data. Furthermore, the system may be configured to adjust the extent of the second and/or third region based on the extent of the first region. In some embodiments, the system may (periodically, or upon change) update the determination of the overlap, and update the extent of the first, second and/or third region accordingly.

The combined image data may be used by a user of the microscope, e.g. by a surgeon using the surgical microscope during surgery. For example, the combined image data may be provided to the user via a display device 160 (e.g. 160a, 160b or 160c) of the microscope system. In other words, the system may be configured to provide the combined image data to a display device 160, e.g. via interface 112. There are different display devices that enable a three-dimensional viewing of the combined image data. For example, the display device 160 may be a display device suitable for providing a three-dimensional perception of the combined image data (e.g. of the first region of the combined image data). For example, the display device may be one of a three-dimensional display, a three-dimensional ocular display, and three-dimensional headset display. For example, the three-dimensional display and/or the three-dimensional ocular display may be a display that is suitable for providing a three-dimensional perception of the combined image data (e.g. of the first region of the combined image data) via a headset with differently polarized glasses. The three-dimensional headset display may be a virtual reality headset that is suitable for providing a three-dimensional perception of the combined image data based on a movement of the headset.

The interface 112 may correspond to one or more inputs and/or outputs for receiving and/or transmitting information, which may be in digital (bit) values according to a specified code, within a module, between modules or between modules of different entities. For example, the interface 112 may comprise interface circuitry configured to receive and/or transmit information. In embodiments the one or more processors 114 may be implemented using one or more processing units, one or more processing devices, any means for processing, such as a processor, a computer or a programmable hardware component being operable with accordingly adapted software. In other words, the described function of the one or more processors 114 may as well be implemented in software, which is then executed on one or more programmable hardware components. Such hardware components may comprise a general-purpose processor, a Digital Signal Processor (DSP), a micro-controller, etc. In at least some embodiments, the one or more storage devices 116 may comprise at least one element of the group of a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

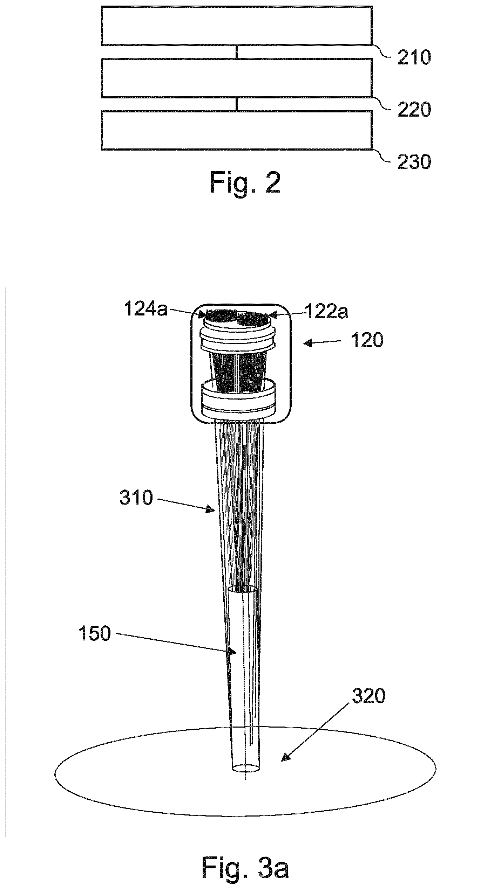

More details and aspects of the system and microscope system are mentioned in connection with the proposed concept or one or more examples described above or below (e.g. Fig. 2 to 4). The system or microscope system may comprise one or more additional optional features corresponding to one or more aspects of the proposed concept or one or more examples described above or below.

Fig. 2 shows a flow chart of an embodiment of a method for a microscope. For example, the method may be suitable for the microscope 120, and/or the microscope system 100, of Figs. 1a and/or 1b. The method comprises obtaining 210 first image data of a sample from a first optical imaging sensor of the microscope. The method comprises obtaining 220 second image data of the sample from a second optical imaging sensor of the microscope. The method comprises combining 230 the first image data and the second image data to obtain combined image data. A first region of the combined image data comprises a stereoscopic view of a first region of the sample that is based on the first and the second image data. A second region of the combined image data comprises a two-dimensional view of a second region of the sample that is based on one of the first image data and the second image data.

As indicated above, features described in connection with the system 110 and the microscope system 100 of Figs. 1a and/or 1b may be likewise applied to the method of Fig. 2.

In particular, the method may comprise directing the microscope at a cavity, and generating the combined image data of the cavity. In other words, the combined image data may be generated such, that the field of view of the combined image data comprises the cavity, and such that the first region of the combined image data is a view from inside the cavity.

More details and aspects of the method are mentioned in connection with the proposed concept or one or more examples described above or below (e.g. Fig. 1a to 1c, 3a to 4). The method may comprise one or more additional optional features corresponding to one or more aspects of the proposed concept or one or more examples described above or below.

Fig. 3a shows a schematic overview of a structure of a microscope system. Fig. 3a shows the microscope 120, observation rays 310, a dilator tube 150 and a focal plane 320. The observation rays 310 comprises a first portion of observation rays 122a for the first optical imaging sensor 122, and a second portion of observation rays 124a for the second optical imaging sensor. Fig. 3a show a more detailed for of the structure of the microscope system, where interaction between the observation rays 310 and the dilator tube 150 is shown in more detail. Fig. 3b shows a cut-off 330 of observation rays (of the left channel / second imaging sensor) at the dilator entrance diameter. As shown in Fig. 3c, due to the cut-off rays, parts of the field of interest are missing on the left channel, but can be seen on the right channel. In Fig. 3c, the first 132, second 134 and third 136 region of the sample are shown. Only the center portion (i.e. the first region 132) may have full three-dimensional (i.e. stereoscopic) information.

Embodiments may provide image processing to compensate for the cut-off regions. In particular, embodiments may provide an image processing algorithm for a "deep cavity" mode. Referring back to Fig. 1c, image data for regions 142 and 146 may be available form the left channel, and image data for regions 142 and 144 may be available from the right channel. The image processing may be used to merge/replace the missing information from the left channel (in the example) with the information on the right channel and vice versa. After the merging procedure, the first region 142 of the combined image data may be available as a fully three-dimensional view, and the second 144 (from the right sensor) and third regions 146 (from the left sensor) may be available as a two-dimensional view. While the replaced information might only comprise a two-dimensional view, the overall image impression (center in 3D, corner in 2D) may be more convenient and provide an increased information content.

More details and aspects of the concept are mentioned in connection with the proposed concept or one or more examples described above or below (e.g. Fig. 1a to 2, 4). The concept may comprise one or more additional optional features corresponding to one or more aspects of the proposed concept or one or more examples described above or below.

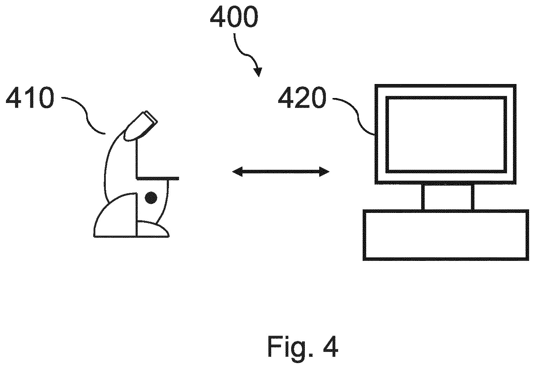

Some embodiments relate to a microscope comprising a system as described in connection with one or more of the Figs. 1a to 3c. Alternatively, a microscope may be part of or connected to a system as described in connection with one or more of the Figs. 1a to 3c. Fig. 4 shows a schematic illustration of a system 400 configured to perform a method described herein. The system 400 comprises a microscope 410 and a computer system 420. The microscope 410 is configured to take images and is connected to the computer system 420. The computer system 420 is configured to execute at least a part of a method described herein. The computer system 420 may be configured to execute a machine learning algorithm. The computer system 420 and microscope 410 may be separate entities but can also be integrated together in one common housing. The computer system 420 may be part of a central processing system of the microscope 410 and/or the computer system 420 may be part of a subcomponent of the microscope 410, such as a sensor, an actor, a camera or an illumination unit, etc. of the microscope 410.

The computer system 420 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 420 may comprise any circuit or combination of circuits. In one embodiment, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 420 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable. Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference Signs

- 100: Microscope system
- 105: Base unit
- 110: System for a microscope
- 112: Interface
- 114: One or more processors
- 116: One or more storage devices
- 120: Microscope
- 122: First optical imaging sensor
- 122a: Observation rays for first optical imaging sensor
- 124: Second optical imaging sensor
- 124a: Observation rays for second optical imaging sensor
- 132: First region of the sample
- 134: Second region of the sample
- 136: Third region of the sample
- 142: First region of the combined image data
- 144: Second region of the combined image data
- 146: Third region of the combined image data
- 148: Spacer
- 150: Tube
- 160: Display devices
- 160a: Auxiliary display
- 160b: Ocular displays
- 160c: Auxiliary display
- 170: Arm
- 180: Handles
- 210: Obtaining first image data
- 220: Obtaining second image data
- 230: Combining the first and second image data
- 310: Observation rays
- 320: Focal plane
- 330: Cut-off of observation rays at dilator
- 400: Microscope system
- 410: Microscope
- 420: Computer system

## Claims

1. A system (110; 420) for a microscope (120; 410), the system comprising one or more processors (114) and one or more storage devices (116), wherein the system is configured to:
obtain first image data of a sample (130) from a first optical imaging sensor (122) of the microscope;
obtain second image data of the sample from a second optical imaging sensor (124) of the microscope;
combine the first image data and the second image data to obtain combined image data (140),
wherein a first region (142) of the combined image data comprises a stereoscopic view of a first region (132) of the sample that is based on the first and the second image data, and
wherein a second region (144) of the combined image data comprises a two-dimensional view of a second region (134) of the sample that is based on one of the first image data and the second image data.

2. The system according to claim 1, wherein the system is suitable for performing partial stereoscopic imaging of a partially obstructed region within a cavity.

3. The system according to one of the claims 1 or 2, wherein the first region of the sample is separate from the second region and/or separate from a third region of the sample.

4. The system according to one of the claims 1 to 3, wherein the second region (144) of the combined image data comprises a two-dimensional view of the second region (134) of the sample that is based on the first image data, and wherein a third region (146) of the combined image data comprises a two-dimensional view of a third region (136) of the sample that is based on the second image data.

5. The system according to one of the claims 1 to 4, wherein the system is configured to determine an overlap of the first and second image data, and to identify the first region of the sample within the first and second image data based on the overlap of the first and second image data.

6. The system according to one of the claims 1 to 5, wherein the system is configured to generate the combined image data such, that a spacer (148) is inserted between the first region and the second region within the combined image data.

7. The system according to one of the claims 1 to 6, wherein the system is configured to provide the combined image data to a display device (160).

8. The system according to claim 7, wherein the display device is one of a three-dimensional display, a three-dimensional ocular display, and three-dimensional headset display.

9. The system according to one of the claims 1 to 8, wherein the first region of the combined image data is arranged at a central position of the combined image data, and wherein the second region and/or a third region of the combined image data is arranged at a peripheral position of the combined image data.

10. A microscope system (100; 400) comprising a microscope (120; 410) and the system (110; 420) according to one of the claims 1 to 9.

11. The microscope system according to claim 10, wherein the microscope system comprises the first optical imaging sensor (122) and the second optical imaging sensor (124).

12. Using the system according to one of the claims 1 to 9 and/or the microscope system according to one of the claims 10 or 11 for performing partial stereoscopic imaging of a cavity.

13. A method for a microscope, the method comprising:
obtaining (210) first image data of a sample from a first optical imaging sensor of the microscope;
obtaining (220) second image data of the sample from a second optical imaging sensor of the microscope;
combining (230) the first image data and the second image data to obtain combined image data,
wherein a first region of the combined image data comprises a stereoscopic view of a first region of the sample that is based on the first and the second image data, and
wherein a second region of the combined image data comprises a two-dimensional view of a second region of the sample that is based on one of the first image data and the second image data.

14. A computer program with a program code for performing the method according to claim 13 when the computer program is executed on a processor.
